# EUROPEAN PATENT SPECIFICATION

(11) **EP 1 258 189 B1**
(45) Date of publication and mention of the grant of the patent: **13.09.2006**
(21) Application number: 02078416.1
(22) Date of filing: 09.07.1998
(51) Int. Cl.: A01J 5/017, A01J 7/04, A01J 7/02

(54) **A construction including an implement for automatically milking animals**
Vorrichtung mit einem Gerät zum automatischen Melken von Tieren
Structure contenant une machine à traire automatique

(30) Priority: 17.07.1997 NL 1006607
(43) Date of publication of application: 20.11.2002
(62) Divisional of application: 98932636.8
(73) Proprietor: MAASLAND N.V., 3147 PA Maassluis (NL)
(72) Inventor: Van Der Lely, Olaf, 6300 ZUG (CH); Van Der Lely, Cornelis, 6300 ZUG (CH)
(74) Representative: Corten, Maurice Jean F.M.

(56) References cited:
- EP-A- 0 630 558
- EP-A- 0 728 412
- WO-A-96/13151

## Description

The invention relates to a construction according the preamble of claim 1.

Such a construction is known from the European patent application EP0728412-A1. In this document a milkbox is described with an implement for milking animals which implement comprises teat cups being connectable to the teats of an animal to be milked. Separate cups are provided for performing a cleaning action or for foremilking the animal. Gripping means are available to connect the teat cups and the separate cups to the teats of the animal.

It is the object of the invention to facilitate the connection of separate cups.

This is achieved by the features of the characterizing part of claim 1. Hereby a proper connection of the separate cups to the teats is realized.

The invention will now be explained in further detail with reference to the accompanying drawing.

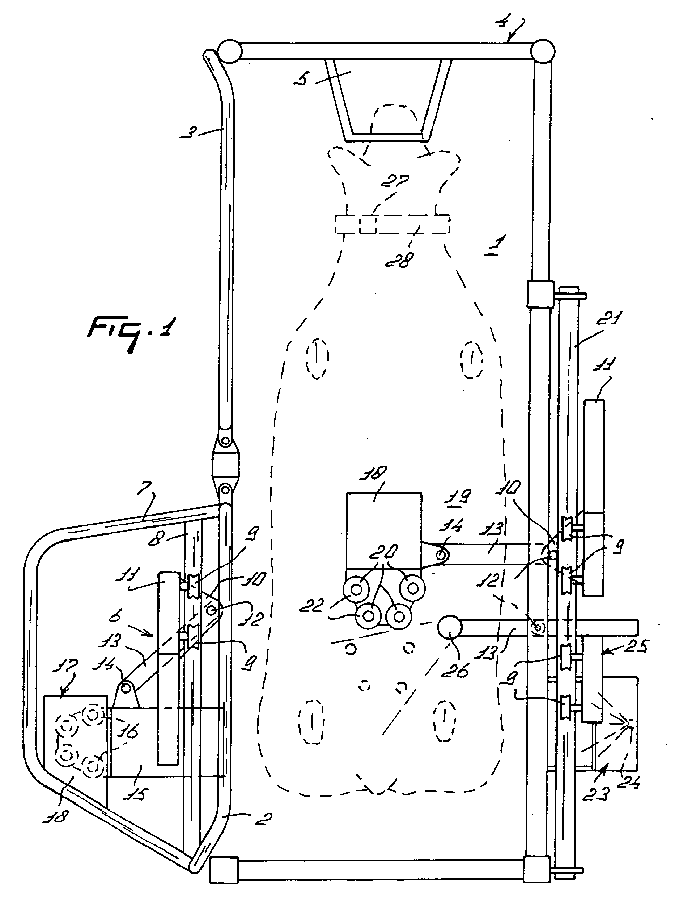

Figure 1 shows schematically a plan view of a milk box, a robot arm with teat cups and a robot arm with separate cups being disposed therein.

Figure 1 shows a plan view of a milk box 1 provided with an entrance door 2 and an exit door 3. Near the front side of the milk box 1, a feed trough 5 is fitted to the frame 4, in which feed trough 5 fodder, such as concentrate, can be fed to an animal present in the milk box 1.

To the entrance door 2 there is fitted a milking robot 6. The milking robot 6 is surrounded by a U-shaped protective bracket 7 which is disposed on the entrance door 2. Between the two legs of the U-shaped protective bracket 7 there is disposed a longitudinal guide means 8 extending in the longitudinal direction of the milk box 1 and along which the milking robot 6 can be moved via a pair of rollers 9 by a (non-shown) motor, preferably a stepper motor. The milking robot 6 comprises a first robot arm 10 which is fastened to a support beam 11 to which the rollers 9 are attached. The first robot arm 10 is hingeably connected to a second robot arm 13 via a vertical axis 12. The second robot arm 13 itself is hingeably connected about a vertical axis 14 to a third robot arm 15 carrying four teat cups 16 at one of its ends. In the position shown in Figure 1 the teat cups 16 are inoperative. The first, second and third robot arms 10; 13; 15 can be rotated relative to each other by (non-shown) motors, such as stepper motors and/or pneumatic or hydraulic, possibly servo-controlled cylinders. The milking robot 6 can further be moved in height by a (non-shown) hingeable arm construction.

To the U-shaped protective bracket 7 there is further fitted a first cleaning device 17 for cleaning of the teat cups. The first cleaning device 17 comprises a box-shaped housing 18 in which the teat cups 16 can be cleaned by means of fluid and/or air.

Near the other longitudinal side of the milk box 1 there is arranged a robot 19 with separate cups 20 which are capable of being connected to the animal's teats which can thus be cleaned and/or disinfected and/or foremilked and/or stimulated to give milk. Like the previous milking robot 6, the robot 19 is movable via a longitudinal guide means 21 which is fastened to the frame 4 of the milk box 1 and extends in the longitudinal direction of the milk box 1. Apart from the cups 20, the robot 19 is designed in the same manner and therefore indicated in Figure 1 by the same reference numerals. The separate cups 20 have a larger diameter, preferably one and a half times as large as the teat cups 16. Each of the separate cups 20 is further provided with a relatively large contact face 22 with which the cup, when it is connected to a teat, is situated against the udder of the animal. The large contact face 22 ensures that the interior space of the separate cup 20 is properly shut off from the environmental atmosphere.

Near the same longitudinal side as where the robot 19 is arranged, near the°rear side of the milk box 1 there is disposed a second cleaning device 23 for cleaning and/or disinfecting the separate cups 20. Like the first cleaning device 17, the second cleaning device 23 is provided with a box-shaped housing with a cleaning member 24 disposed therein by means of which cleaning member 24 water, air or disinfecting fluid can be spouted both into and against the separate cups 20.

To the longitudinal guide means 21 there is fitted a further robot 25 in a similar manner as the robot 19. Therefore, corresponding parts are indicated by the same reference numerals. At the end of the arm 13 of the further robot 25 there is fitted a detector 26 with the aid of which the position of the teats of an animal can be determined. The detector 26 comprises a (non-shown) laser.

For the purpose of identifying the animal present in the milk box 1, the implement comprises a (non-shown) animal identification system and a computer which are capable of cooperating with a data carrier 27 which is disposed around the neck of the animal via a collar 28.

The above described implement functions as follows: The animal can enter the milk box 1 via the entrance door 2, whereafter the animal is identified by means of the (non-shown) animal identification system. If there has been established that the animal is to be milked and/or to be foremilked and/or the animal's teats are to be cleaned, there is fed to the animal a dosaged quantity of concentrate in the feed trough 5 via a (non-shown) concentrate dosage system. Then, by means of the further robot 25, the position of the teats of the animal is determined. Thereafter the robot 19 is activated and the separate cups 20 are connected to the teats of the animal. Depending on how the computer is pre-programmed the animal can subsequently be cleaned and/or disinfected and/or stimulated and/or foremilked by means of the separate cups 20. Thereafter the separate cups 20 are moved to the second cleaning device 23 and (non-shown) switch means are operated by the computer, in such a manner that the separate cups 20 are cleaned and/or disinfected by means of the second cleaning device 23. During cleaning of the separate cups 20 the milking robot 6 is activated and the teat cups 16 are connected to the teats of the animal to be milked, whereafter the animal is milked. When there has been established by the computer that the animal has been milked, the teat cups 16 are moved to the first cleaning device 17 with the aid of the milking robot 6. Subsequently the switch means are activated again by the computer, in such a manner that the teat cups 16 are cleaned and/or disinfected. It is also possible to adjust the switch means in such a manner that both the teat cups 16 and the separate cups 20 are cleaned by air and/or blown dry. Cleaning and/or disinfecting or blowing dry or blowing clean of the teat cups 16 can go on, even when the entrance door 2 is opened for a next animal.

## Claims

1. A construction including an implement for automatically milking animals, such as cows, which implement comprises teat cups (16) which are capable of being connected to the teats of an animal to be milked, and which implement comprises separate cups (20) having an other function than teat cups and which can be connected to the teats of an animal, said separate cups (20) having a larger diameter than the teat cups (16), and by means of said separate cups (20) the teats can be cleaned and/or disinfected and/or foremilked, **characterized in that** the diameter of the separate cups (20) is approximately one and a half times as large as the diameter of the teat cups (16), and **in that** the separate cups (20) are provided near their upper sides with an enlarged contact face with which the separate cups (20) are situated against the udder of the animal when they are connected to the teats.

## Patentansprüche

1. Anlage mit einer Vorrichtung zum automatischen Melken von Tieren, wie z. B. Kühen, wobei die Vorrichtung Zitzenbecher (16) umfaßt, die an die Zitzen eines zu melkenden Tieres anschließbar sind, und wobei die Vorrichtung separate Becher (20) umfaßt, die eine andere Funktion als Zitzenbecher haben und an die Zitzen eines Tieres anschließbar sind, wobei die separaten Becher (20) einen größeren Durchmesser, als die Zitzenbecher (16) haben, und wobei die Zitzen mittels der separaten Becher (20) gereinigt und/oder desinfiziert und/oder vorgemolken werden können,
**dadurch gekennzeichnet, daß** der Durchmesser der separaten Becher (20) etwa das Eineinhalbfache des Durchmessers der Zitzenbecher (16) beträgt, und daß die separaten Becher (20) nahe ihren Oberseiten mit, einer vergrößerten Kontaktfläche versehen sind, mit der die separaten Becher (20) an dem Euter des Tieres anliegen, wenn sie an die Zitzen angeschlossen sind.

## Revendications

1. Construction comprenant un dispositif pour la traite automatique d'animaux, tels que des vaches, lequel dispositif comprend des gobelets trayeurs (16) qui peuvent être reliés aux trayons d'un animal devant être trait, et lequel dispositif comprend des gobelets distincts (20) ayant une autre fonction que les gobelets trayeurs et qui peuvent être reliés aux trayons d'un animal, lesdits gobelets distincts (20) ayant un diamètre plus grand que les gobelets trayeurs (16), et au moyen desdits gobelets distincts (20), les trayons peuvent être nettoyés et/ou désinfectés et/ou les premiers jets tirés, **caractérisée en ce que** le diamètre des gobelets distincts (20) est approximativement égal à une fois et demie le diamètre des gobelets trayeurs (16), et **en ce que** les gobelets distincts (20) sont pourvus à proximité de leurs côtés supérieurs d'une face de contact agrandie avec laquelle les gobelets distincts (20) sont situés contre le pis de l'animal lorsqu'ils sont reliés aux trayons.
